Europäisches Patentamt

European Patent Office

Office européen des brevets

(19)

(11) Veröffentlichungsnummer : **0 185 247 B1**

# (12) EUROPÄISCHE PATENTSCHRIFT

(45) Veröffentlichungstag der Patentschrift :
22.02.89

(21) Anmeldenummer : 85115363.5

(22) Anmeldetag : 04.12.85

(51) Int. Cl.⁴ : **F 16 H 1/445**

(54) **Sperrbares Ausgleichsgetriebe für Kraftfahrzeuge.**

(30) Priorität : 08.12.84 DE 3444843

(43) Veröffentlichungstag der Anmeldung :
25.06.86 Patentblatt 86/26

(45) Bekanntmachung des Hinweises auf die Patenter-
teilung : 22.02.89 Patentblatt 89/08

(84) Benannte Vertragsstaaten :
DE FR GB IT SE

(56) Entgegenhaltungen :
EP--A-- 0 090 944
FR--A-- 2 434 969
GB--A-- 1 005 195
US--A-- 2 991 664
US--A-- 4 287 977

(73) Patentinhaber : BAYERISCHE MOTOREN WERKE
Aktiengesellschaft
Postfach 40 02 40 Petuelring 130 - AJ-36
D-8000 München 40 (DE)

(72) Erfinder : Lichnofsky, Rüdiger
Muggenthalerstrasse 1
D-8033 Krailling (DE)
Erfinder : Löffler, Albert
Silcherstrasse 7
D-8000 München 40 (DE)
Erfinder : Martin, Harry
Wettersteinstrasse 20
D-8027 Neuried (DE)
Erfinder : Kuzma, Gyoezoe
Anton-Hackl-Strasse 7
D-8060 Dachau (DE)

## Beschreibung

Die Erfindung bezieht sich auf ein sperrbares Ausgleichsgetriebe für Kraftfahrzeuge nach dem Oberbegriff des Hauptanspruchs.

Ein solches Ausgleichsgetriebe zeigt die US-PS 3 899 938. Hier ist der Druckkolben als Ringkolben in dem Getriebegehäuse geführt. Er beaufschlagt über ein Axiallager einen mit dem Ausgleichsgehäuse umlaufenden hülsenartigen Druckkörper, der wiederum auf daß Lamellenpaket wirkt. Eine Druckfeder, die sich am Ausgleichsgehäuse abstützt, preßt den Druckkörper gegen das Axiallager und gibt ihm die für seine Funktion notwendige Vorspannung. Auf das Lamellenpaket wirkt die Druckfeder nicht.

Aufgabe der Erfindung ist es, ein gattungsgemäße Ausgleichsgetriebe aufzufinden, das einen kompakten Aufbau aufweist und bei dem es möglich ist, soweit die vorliegenden Verhältnisse es für wünschenswert erscheinen lassen, die Kraft der Druckfeder wenigstens bis zu einem gewissen Grad auf das Lamellenpaket wirken zu lassen.

Die Aufgabe wird erfindungsgemäß den kennzeichnenden Merkmalen des Hauptanspruchs gelöst. Vorteilhafte Ausführungsbeispiele ergeben sich aus den Unteransprüchen.

Nach der Erfindung ist demnach das Axiallager zwischen einer mit dem Druckkolben verbundenen Lagerplatte und einem auf die Kupplungslamellen wirkenden Druckring vorgesehen. Die Vorspannung des Axiallagers bewirkt die zwischen der Lagerplatte und dem Getriebegehäuse angeordnete Druckfeder. Die so beschriebene Konstruktion weist einen kompakten, in ihren Dimensionen kleingehaltenen Aufbau auf. Außerdem läßt sich das Lamellenpaket über die Druckfeder, soweit gewünscht, vorspannen.

Je nach Anwendungsfall, ist eine derartige Vorspannung nicht unbedingt erwünscht. Um dies zu erreichen, und trotzdem entsprechend der Erfindung einen kompakten Aufbau beizubehalten, sieht die Erfindung in einer weiteren vorteilhaften Ausgestaltung eine Entlastungsfeder vor, die der Druckfeder entgegenwirkt. Die Anordnung der Entlastungsfeder zwischen Druckring und Ausgleichsgehäuse hebt die Kraft der Druckfeder auf das Lamellenpaket teilweise auf, sichert aber zugleich die erforderliche Vorspannung für das Axiallager. Durch die Wahl der Federkonstante dieser Entlastungsfeder läßt sich die Vorspannung auf das Lamellenpaket einstellen. Es hat sich als zweckmäßig erwiesen, sie kleiner zu halten als die Federkonstante der Druckfeder. Dadurch bleibt eine gegebenenfalls gewünschte Restvorspannung auf das Lamellenpaket erhalten.

Nachfolgend ist ein vorteilhaftes Ausführungsbeispiel der Erfindung näher beschrieben und in der dazugehörigen Zeichnung dargestellt.

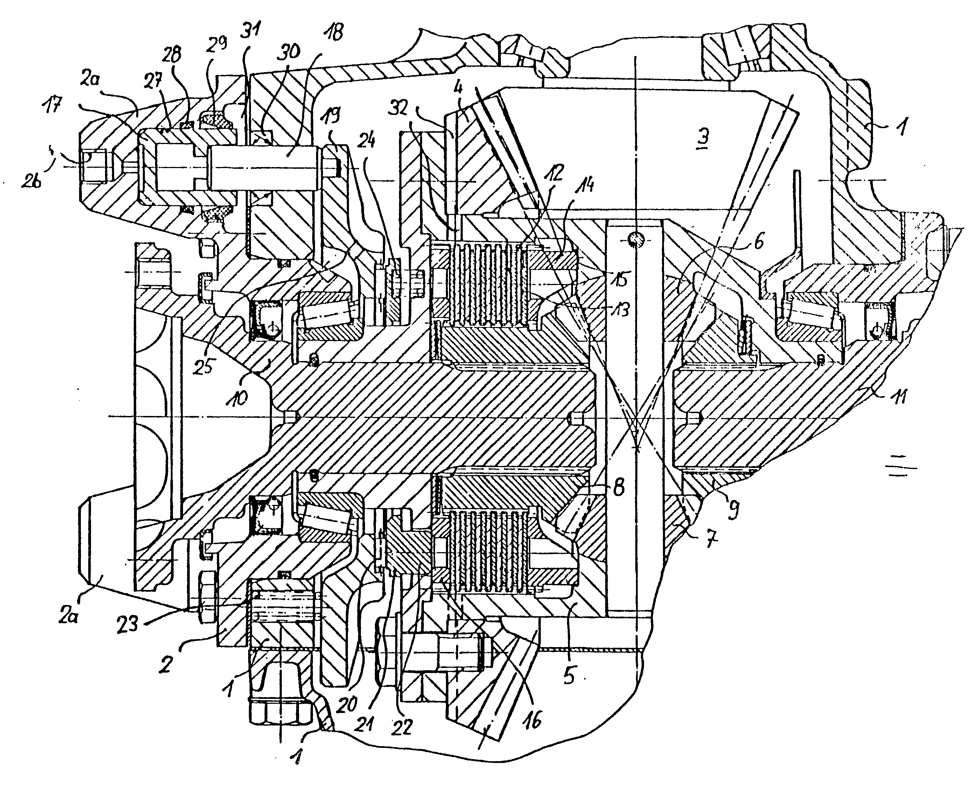

In der einzigen Figur der Zeichnung ist ein sperrbares Ausgleichsgetriebe für Kraftfahrzeuge dargestellt mit einem feststehenden Getriebegehäuse 1, das auf einer Seite mit einem angeschraubten Gehäusedeckel 2 abgeschlossen ist. Das Getriebegehäuse 1 nimmt ein drehbar gelagertes Antriebsritzel 3 auf, das mit einem Tellerrad 4 eines Ausgleichsgehäuses 5 kämmt. Das Ausgleichsgehäuse 5 wiederum ist drehbar im Getriebegehäuse 1 gelagert. Im Inneren des Ausgleichsgehäuses 5 sind Ausgleichszahnräder 6 und 7 in Kegelradbauweise angeordnet, die in die Zähne von Achswellenräder 8 und 9 greifen. Die Achswellenräder 8, 9 sind verdrehfest auf Abtriebswellen 10, 11 gehalten, die wiederum im Ausgleichsgehäuse 5 drehbar gelagert sind.

Im Inneren des Ausgleichsgehäuses 5 sind Kupplungslamellen 12, 13 vorgesehen, die in abwechselnder Folge mit dem Ausgleichsgehäuse 5 und dem Achswellenrad 8 in Antriebsverbindung stehen. Hierzu weist das Achswellenrad 8 einen hohlzylindrischen Fortsatz auf mit einer in Achsrichtung sich erstreckenden Keilverzahnung auf der äußeren Mantelfläche. In diese Keilverzahnung greifen die Kupplungslamellen 13 mit ihrem inneren, entsprechend ausgeformten Rand ein. Ähnliche Ausformungen weisen die Kupplungslamellen 12 auf, die mit einer entsprechenden Keilverzahnung des Ausgleichsgehäuses 5 zusammenwirken. Über diese Keilverzahnung steht außerdem ein den Ausgleichsrädern zugewandter Anschlagring 14 in Antriebsverbindung mit dem Ausgleichsgehäuse 5. Der Anschlagsring 14 stützt das Lamellenpaket gegenüber dem Ausgleichsgehäuse 5 ab, das hierfür eine ringförmige Innenschulter 15 vorsieht. Auf der anderen Seite des Lamellenpakets befindet sich eine Druckscheibe 16, die frei drehbar ist.

Der Gehäusedeckel 2 weist mehrere domförmige Anschlußstutzen 2a auf, in denen jeweils ein Druckkolben 17 geführt ist. Durch die Darstellungsart läßt die Zeichnung lediglich zwei solcher Dome 2a erkennen. Zum Druckkolben 17 führt eine Anschlußbohrung 2b, über die der Druckkolben 17 mit Drucköl beaufschlagt wird. Der Druckaufbau ist abhängig von den einzelnen Fahrzuständen, insbesondere beeinflussen ihn die Differenzdrehzahlen der angetriebenen Fahrzeugräder. Durch eine nicht näher dargestellte elektronische Auswertschaltung und einem entsprechenden Steuerventil kann der Druckkolben auch durch andere Parameter, wie Bremsen des Fahrzeuges, Anfahren, Zug- oder Schubbetrieb gesteuert werden.

Der Druckkolben 17 ist in einer Sacklochbohrung 27 des Gehäusedeckels 2 geführt. Die Innenwand der Bohrung weist eine umlaufende Nut auf, in die ein elastischer Rückstellring 28 eingelegt ist. Der Rückstellring 28 haftet an der Mantelfläche des Druckkolbens 17 und macht dessen Bewegung unter Verformung bis zu einem gewissen Grad mit. Wird die Hubbewegung des Druckkolbens 17 zu groß, rutscht er etwas unter dem Rückstellring 28 durch.

Die Zeichnung zeigt den Druckkolben 17 in der anfänglichen Grundstellung. Er stößt dabei gegen den Boden der Sacklochbohrung 27. Bei dem sich über die Lebensdauer der Kupplung gesehenen Verschleiß der Lamellen 12, 13 entfernt sich der Druckkolben 17 in seiner Grundstellung immer mehr von diesem Boden.

Vom Druckkolben 17 aus führt eine Kolbenstange 18 durch die Wand des Getriebegehäuses 1 hindurchzu einer Lagerplatte 19, mit der sie drehfest verbunden ist.

Eine Dichtung 29 ist zwischen dem Druckkolben 17 und einem im Durchmesser erweiterten Endabschnitt der Sacklochbohrung 27 vorgesehen. Eine weitere Dichtung 30 befindet sich zwischen der Kolbenstange 18 und der Gehäusewand des Getriebegehäuses 1. Zwischen den beiden Dichtungen 29, 30 verbleibt ein Freiraum, der nach außen Verbindung hat. Dies ist allgemein mit der Kennziffer 31 bezeichnet.

Die Lagerplatte 19, sie ist wie das Getriebegehäuse 1 feststehend, nimmt ein Axialdrucklager 20 auf. Das Axialdrucklager 20 ermöglicht einem Druckring 21 das Drehen mit dem Ausgleichsgehäuse 5. Im gleichmäßigen Abstand am Umfang sind am Druckring 21 einstückige Zapfen 22 vorgesehen. Sie ragen durch Bohrungen in das Innere des Ausgleichsgehäuses 5 und beaufschlagen dort die Druckscheibe 16.

Gleichmäßig verteilt angeordnete Druckfedern 23 sitzen in dem Getriebegehäuse 1. Sie stützen sich einmal an dem Gehäusedeckel 2 ab, zum anderen drücken sie auf die Lagerplatte 19 und über das Axiallager 20 und Druckring 21 auf das Lamellenpaket. Mehrere über den Umfang verteilt angeordnete Entlastungsfedern 24 sind in Sacklochbohrungen des Ausgleichsgehäuses 5 eingelegt. Sie wirken auf den Druckring 21 in dem Sinne, daß sie der Federkraft der Druckfedern 23 entgegenwirken. Dadurch verringern sie die Vorspannung des Lamellenpakets. Andererseits bleibt die für das Axiallager 20 notwendige Vorspannung erhalten.

In dem Druckring 21 sind noch mehrere Durchflußbohrungen 25 vorgesehen, ebenso in dem Getriebegehäuse 1. Diese Bohrungen ermöglichen es, dem Schmieröl auch in schlecht zugängliche Bereiche zu gelangen.

Desweiteren weist das Ausgleichsgehäuse 5 mehrere Durchflußkanäle 32 auf (in der Zeichnung ist nur einer sichtbar). Diese Durchflußkanäle 32 führen radial aus dem Innern des Ausgleichsgehäuse 5 im Bereich des Lamellenpakets nach außen. Durch sie wird verhindert, daß sich das Schmieröl im Bereich des Lamellenpakets staut und dort übermäßig erhitzt. Durch die Durchflußkanäle 32 wirkt der Ausgleichskorb wie eine Art Kreiselpumpe, die das erwärmte Öl nach außen fördert und so den Zufluß von kühlerem Öl zu dem Lamellenpaket ermöglicht.

Wird über die Anschlußbohrung 2b dem Druckkolben 17 Drucköl zugeführt, bewegt er sich nach rechts und preßt über die Lagerplatte 19 und die Zapfen 22 des Druckringes 21 das Lamellenpaket zusammen. Dadurch wird die Abtriebswelle 10 gegen das Ausgleichsgehäuse 5 abgebremst, was faktisch eine Kopplung der Abtriebswellen 10 und 11 zur Folge hat.

Bei entsprechender konstruktiver Auslegung wäre auch ein direktes Abbremsen der Abtriebswellen gegeneinander möglich. Ebensowenig ist die Erfindung auf ein Ausgleichsgetriebe in Kegelbauweise beschränkt, und schließlich läßt sich das Ausgleichsgetriebe sowohl als Achsgetriebe einer angetriebenen Achse, als auch als Verteilergetriebe eines Vierradantriebs verwenden.

## Patentansprüche

1. Sperrbares Ausgleichsgetriebe für Kraftfahrzeuge mit einem feststehenden Getriebegehäuse (1), einem darin drehbar gelagerten Ausgleichsgehäuse (5), in dem Ausgleichszahnräder (6, 7) mit Achswellenräder (8, 9) der Abtriebswellen (10, 11) kämmen, und mit im Ausgleichsgehäuse angeordneten Kupplungslamellen (13), die in Achsrichtung der Abtriebswellen durch wenigstens einen im Getriebegehäuse gelagerten Druckkolben (17) über ein durch Federkraft vorgespanntes Axiallager (20) beaufschlagbar sind, wobei sich der Druckkolben von einer Grundstellung in eine den Reibschluß zwischen den Kupplungslamellen bewirkenden Betriebsstellung bewegen läßt, dadurch gekennzeichnet, daß das Axiallager (20) zwischen einer mit dem Druckkolben (17) verbundenen Lagerplatte (19) und einem auf die Kupplungslamellen (12, 13) wirkenden Druckring (21) vorgesehen und daß zwischen Lagerplatte (19) und Getriebegehäuse (1) wenigstens eine axial ausgerichtete Druckfeder (23) angeordnet ist.

2. Ausgleichsgetriebe nach Anspruch 1, dadurch gekennzeichnet, daß zwischen Druckring (21) und Ausgleichsgehäuse (5) wenigstens eine der Druckfeder (23) entgegenwirkende Entlastungsfeder (24) angeordnet ist.

3. Ausgleichsgetriebe nach Anspruch 2, dadurch gekennzeichnet, daß die Druckfeder (23) eine größere Federkonstante als die Entlastungsfeder (24) aufweist.

4. Ausgleichsgetriebe nach einem oder mehreren der Ansprüche 1 bis 3, dadurch gekennzeichnet, daß am Ausgleichsgehäuse (5) im Bereich der Kupplungslamellen (12, 13) radial nach außen verlaufende Durchflußkanäle (32) vorgesehen sind.

## Claims

1. A lockable differential gear for motor vehicles having a stationary gear housing (1), a differential housing (5) rotatably mounted therein and in which differential gear wheels (6, 7) mesh with axle shaft wheels (8, 9) of the driven shafts (10, 11), and having clutch plates (13) arranged in the differential housing which can be loaded in the axial direction of the driven shafts, through an axial bearing (20) initially stressed by spring force, by at least one pressure piston (17) mounted in the gear housing, the pressure piston being capable of being moved from a rest position into a working position to effect frictional engagement between the clutch plates, characterised in that the axial bearing (20) is provided between a bearing plate (19) connected with the pressure piston (17) and a thrust ring (21) acting upon the clutch plates (12, 13), and that at least one axially-directed compression spring (23) is arranged between bearing plate (19) and gear housing (1).

2. A differential gear according to Claim 1, characterised in that at least one relief spring (24) acting against the compression spring (23) is arranged between the thrust ring (21) and the differential housing (5).

3. A differential gear according to Claim 2, characterised in that the compression spring (23) has a greater spring coefficient than the relief spring (24).

4. A differential gear according to any one or more of Claims 1 to 3, characterised in that radially-outwardly extending throughflow passages (32) are provided on the differential housing (5) in the region of the clutch plates (12, 13).

**Revendications**

1. Transmission différentielle à verrouillage pour véhicules automobiles, comportant un carter de transmission fixe (1), un carter de différentiel (5) monté rotatif sur le carter (1), dans lequel des couronnes de différentiel (6, 7) s'engrènent avec des roues dentées (8, 9) d'arbre axial et des disques d'accouplement (13) placées dans le carter de différentiel qui peuvent être appliquées dans le sens axial de l'arbre de sortie par au moins un piston de pression (17) supporté dans le carter de transmission par un palier axial précontraint par la force d'un ressort, où le piston de pression peut se déplacer dans une position de fonctionnement entraînant une liaison par friction entre les disques d'accouplement, caractérisée en ce que le palier axial (20) est placé entre une plaque d'appui (19) liée au piston de pression (17) et une bague de pression (21) agissant sur les disques d'accouplement (12, 13) et en ce qu'entre la plaque d'appui (19) et le carter de transmission (1) se trouve au moins un ressort de pression dirigé axialement.

2. Transmission différentielle selon la revendication 1, caractérisée en ce qu'entre la bague de pression (21) et le carter de différentiel (5) est disposé au moins un ressort de décharge (24) antagoniste du ressort de pression (23).

3. Transmission différentielle selon la revendication 2, caractérisée en ce que le ressort de pression (23) présente un coefficient d'élasticité supérieur à celui du ressort de décharge (24).

4. Transmission différentielle selon l'une ou plusieurs des revendications 1 à 3, caractérisée en ce que sur le carter de différentiel (5) sont prévus dans la zone des disques d'accouplement (12, 13) des canaux d'écoulement s'étendant radialement vers l'extérieur.

1/1